# FASCICULE DE BREVET EUROPEEN

(11) **EP 2 718 352 B1**
(45) Date de publication et mention de la délivrance du brevet: **15.04.2015**
(21) Numéro de dépôt: 12731112.4
(22) Date de dépôt: 05.06.2012
(51) Int. Cl.: C08J 3/09, C08J 5/18, C08J 3/00, C08L 27/12, C08L 27/16

(54) **SOLVANTS DE POLYMERES FLUORES**
FLUORPOLYMERLÖSUNGSMITTEL
FLUOROPOLYMER SOLVENTS

(30) Priorité: 06.06.2011 FR 1154907
(43) Date de publication de la demande: 16.04.2014
(73) Titulaire: Arkema France, 92700 Colombes (FR)
(72) Inventeur: SCHMITT, Paul-Guillaume, F-64230 Lescar (FR); VAUTHRIN, Mélanie, F-64230 Denguin (FR)
(86) Numéro de dépôt international: PCT/FR2012/051248
(87) Numéro de publication internationale: WO 2012/168641

(56) Documents cités:
- DE-A1- 2 217 375
- FR-A1- 2 850 114
- GB-A- 1 395 729
- US-A- 2 955 095
- US-A- 3 006 715
- US-A- 3 468 994
- US-A- 5 387 378

## Description

La présente invention concerne le domaine des solvants de polymères fluorés, ainsi que l'utilisation desdits polymères fluorés dissous dans l'élaboration de films, membranes, revêtements, et autres.

Les polymères fluorés sont aujourd'hui très largement utilisés pour leurs propriétés de résistances mécanique et chimique et leur résistance au temps. Les polymères sont en effet de plus en plus utilisés dans des applications de plus en plus nombreuses.

Parmi ces applications, les plus fréquentes sont celles où les polymères fluorés sont mis en forme de films, de membranes, de revêtements. En règle générale, les polymères fluorés trouvent des applications tout à fait intéressantes lorsqu'ils sont sous forme de films, supportés ou non, dont l'épaisseur varie de quelques dizaines de nanomètres à quelques millimètres.

Ainsi, à titre d'exemples non limitatifs, les polymères fluorés sont utilisés dans les fabrications de films, membranes, et revêtements, ou encore dans la fabrication de batteries, telles que les batteries de type Li-ion.

Dans de telles applications, les polymères fluorés doivent tout d'abord être mis en solutions, plus ou moins concentrées, l'obtention des films étant ensuite réalisée par élimination du ou des solvants, par exemple par évaporation ou par extraction à l'aide d'un tiers solvant, ou toute autre méthode connue de l'homme du métier.

Les polymères fluorés, et en particulier les poly(fluorure de vinylidène), plus connus sous le nom de PVDF, sont aujourd'hui couramment solubilisés dans la N-méthyl-2-pyrrolidone (NMP). Bien qu'elle soit appropriée pour la mise en forme des polymères fluorés, la NMP présente cependant de nombreux inconvénients. La NMP est en effet un composé à haut risque toxicologique, celle-ci étant désormais classée reprotoxique. Il y a donc un intérêt à substituer la NMP par des solvants ayant un meilleur profil toxicologique.

Le DMSO (ou diméthylsulfoxyde) est un solvant connu qui permet de solubiliser certains grades de PVDF, tels que par exemple les Kynar^{®} et Kynar Flex^{®} commercialisés par la Société Arkema ou encore les Solef^{®}, Hylar^{®}, Halar^{®} ou Hyflon^{®} commercialisés par la Société Solvay. L'utilisation de DMSO permet d'obtenir des solutions de viscosité comparables à celles obtenues avec la NMP. Cependant, pour permettre cette solubilisation, le DMSO doit être chauffé à une température de l'ordre de 50°C, voire supérieure.

En outre, la solution de PVDF dans le DMSO ainsi préparée n'est pas stable dans le temps : on observe souvent une gélification ou un trouble de la solution après seulement 1 à 2 jours. Les utilisateurs sont par conséquent contraints d'utiliser et d'appliquer rapidement la solution afin de réaliser les films requis, ce qui constitue un frein à la substitution de la NMP.

La demande de brevet FR 2 285 227 décrit un procédé d'assemblage de pièces en PVDF par collage, la colle étant une solution diluée de PVDF dans un solvant, ledit solvant pouvant être choisi parmi diméthylformamide (DMF), N,N-diméthylacétamide (DMAC), tétrahydrofurane (THF), diméthylsulfoxyde (DMSO), cyclohexanone (CyHone), hexaméthylphosphoramide (HMPA), butyrolactone, et leurs mélanges. Un exemple montre effectivement que le PVDF peut être solubilisé dans la DMF, mais à une température de 60°C.

Le brevet EP 0 639 106 B1 enseigne la préparation de membranes en utilisant des mélanges de solvant/co-solvant permettant de mettre en solution des PVDF à toutes températures. Bien que de nombreux mélanges possibles soient proposés, il ressort clairement de cet enseignement que seuls les mélanges à base de NMP et de DMF ou d'acétate de n-butyle sont efficaces et sont les seuls à être exemplifiés.

La demande de brevet EP 0 223 709 A2 décrit également un procédé de préparation de membranes poreuses par dissolution d'un polymère fluoré dans un solvant. Les solvants adaptés pour ce procédé sont choisis parmi les cétones, les éthers, les amides et les sulfoxydes, ainsi que leurs mélanges. Le meilleur solvant est indiqué être le mélange acétone/DMF, ce qui est confirmé par les exemples qui n'illustrent que ce seul mélange de solvants. En outre ces exemples enseignent que la dissolution doit être effectuée à chaud et que la solution de polymère doit être utilisée immédiatement.

Le brevet US 5 387 378 décrit également un procédé de préparation de membranes à partir de polymères fluorés qui sont préalablement dissous dans un mélange constitué d'un solvant de haut point d'ébullition et d'un solvant de bas point d'ébullition. À titre d'exemples de tels mélanges de solvants sont cités les mélanges d'acétone et d'un autre solvant choisi parmi DMF, DMAC, DMSO et leurs mélanges.

Les exemples du brevet US 5 387 378 ne présentent que des dissolutions de polymères fluorés dans un mélange acétone/DMAC, où l'acétone est toujours en proportion majoritaire par rapport à la DMAC. En outre le mélange doit être chauffé à 50°C pendant une heure avant la formation du film proprement dite.

Le brevet EP 0 574 957 B1 décrit des membranes composites acrylonitrile-PVDF utilisables dans des opérations de séparation. Les polymères constitutifs des membranes peuvent être solubilisés dans un solvant choisi parmi NMP, DMF, DMSO, HMPA, DMAC, dioxane, et leurs mélanges, éventuellement en présence de co-solvants choisis parmi acétone, méthanol, éthanol, formamide, eau, méthyléthylcétone, et autres. Les exemples présentés montrent uniquement des membranes polyacrylonitrile (PAN) et leurs bonnes résistances aux attaques de solvants tels que NMP, DMF, DMSO, toluène, méthyléthylcétone, acétone, et autres.

Ainsi, parmi toutes les techniques connues aujourd'hui de l'art antérieur, aucune d'entre elles n'est satisfaisante, car aucune d'entre elles ne peut s'imposer comme une technique où les systèmes solvants des polymères fluorés peuvent avantageusement remplacer le solvant de référence qu'est la NMP.

En effet, les techniques décrites dans l'art antérieur montrent que la dissolution des polymères fluorés dans le système solvant doit être effectuée à chaud, c'est-à-dire à une température d'au moins 50°C.

Les techniques de l'art antérieur enseignent également que les solutions obtenues doivent être utilisées rapidement après préparation, l'homme du métier comprenant ainsi que les solutions obtenues ne sont pas stables dans le temps, ou encore ne sont pas stable lorsqu'elles sont refroidies à température ambiante ou encore à la température de mise en forme de la solution de polymères fluorés.

En outre, les techniques de l'art antérieur ne semblent pas s'intéresser à la problématique des viscosités des solutions obtenues, ce qui pourtant est d'une très grande importance pour la mise en forme des polymères fluorés, et ce qui est une des raisons pour lesquelles la NMP est largement utilisée aujourd'hui. En effet, les solutions de polymères fluorés dans la NMP présentent des viscosités faibles, permettant d'obtenir des solutions ayant un taux de polymères élevé et donc d'utiliser moins de solvant pour la préparation de films.

Ainsi, un des objectifs de la présente invention est de proposer l'utilisation d'un système solvant pour la solubilisation de polymères fluorés qui ne présente pas les inconvénients précités et rencontrés dans l'art antérieur.

Plus spécifiquement, un premier objectif de la présente invention est de proposer l'utilisation d'un système solvant pour la solubilisation de polymères fluorés qui est moins toxique que la NMP, en particulier faiblement toxique, voire non toxique.

Un autre objectif est de proposer l'utilisation d'un système solvant pour la solubilisation de polymères fluorés qui ne nécessite pas de chauffer la solution, ou tout au moins de chauffer à une température de l'ordre de, voire inférieure à, 50°C, et de préférence de permette la solubilisation à température ambiante desdits polymères fluorés.

Un autre objectif encore est de proposer l'utilisation d'un système solvant pour la solubilisation de polymères fluorés conduisant à des solutions stables dans le temps, c'est-à-dire des solutions dont la stabilité dans le temps est similaire à celle obtenue avec des solutions dans la NMP, et de manière générale plus stable qu'avec les solvants connus de l'art antérieur, telle la NMP, le DMSO, les cétones, la DMAC, et autres.

Un autre objectif encore est de proposer l'utilisation d'un système solvant pour la solubilisation de polymères fluorés conduisant à des solutions de polymères dont la viscosité est similaire à la viscosité de solutions de polymères fluorés dans la NMP, et en général dont la viscosité est sensiblement plus faible que la viscosité des solutions obtenues avec les solvants utilisés dans les techniques de l'art antérieur.

Il a maintenant été découvert que les objectifs précités peuvent être atteints, en totalité ou au moins en partie, grâce à l'utilisation d'un système solvant selon la présente invention. D'autres objectifs encore qui peuvent être atteints grâce aux objets de la présente invention apparaîtront dans la description qui suit.

Selon un premier aspect, la présente invention concerne l'utilisation, pour la solubilisation de polymères fluorés, d'un système solvant à base de DMSO qui permet de solubiliser des polymères fluorés sans avoir à chauffer à haute température, d'obtenir des solutions dont les viscosités plus faibles que celles obtenues avec le DMSO seul, d'obtenir des solutions de polymères fluorés beaucoup plus stables dans le temps qu'avec le DMSO et comparables à la NMP. Un autre avantage de l'utilisation du système solvant selon l'invention est qu'elle confère aux solutions de polymères fluorés un point de cristallisation plus faible que celui du DMSO pur, c'est-à-dire inférieur à environ 18°C.

Plus précisément, la présente invention concerne l'utilisation d'au moins un système solvant pour la solubilisation de polymères fluorés, en particulier le poly(fluorure de vinylidène), ledit système solvant comprenant:
- de 50% à 99,9% en poids d'une composition (A) comprenant du diméthylsulfoxyde (DMSO), et
- de 0,1% à 50% en poids d'une composition (B) comprenant au moins une cétone.

Il a en effet été découvert de manière surprenante, que l'utilisation d'un système solvant selon l'invention à base de DMSO, bien que comprenant une quantité inférieure ou égale à 50% en poids de cétone(s), permettent l'obtention de solutions de polymères fluorés stables dans le temps et dont la viscosité est tout à fait comparable aux valeurs de viscosité des solutions de polymères fluorés dans les solvants connus de l'art antérieur, en particulier des solutions dans la NMP.

Ainsi, les polymères fluorés (ou résines fluorées) qui peuvent être mis en solution dans le système solvant utilisé selon la présente invention peuvent être de tout type connu de l'homme du métier et en particulier les homopolymères et copolymères fluorés et/ou chlorofluorés, tels que par exemple ceux commercialisés par la société Arkema sous les dénominations Kynar^{®} et Kynar Flex^{®}, par exemple le Kynar^{®} 761, ceux commercialisé par la société Solvay sous la dénomination Solexis^{®} (homo- et co-polymères obtenus par polymérisation en suspension), sous la dénomination Solef^{®}, tels que par exemple les homopolymères 1010, 1012, 1013, 1015, 6008, 6010, 6012, 6013, 6020, et 5130, les copolymères PVDF-HFP 11008, 11010, 21508, et 21216, les copolymères PVDF-CTFE 31008, 31508, 32008, sous la dénomination Hylar^{®} (homo- et co-polymères par polymérisation en émulsion, Hylar^{®} 461), les copolymères ECTFE (éthylène/chlorotrifluoroéthylène) commercialisés sous la dénomination Halar^{®}, ainsi que les perfluoro-ionomères Hyflon^{®} E79, E87 et D83, et autres, pour ne citer que certains d'entre eux, de manière non limitative.

Le système solvant utilisé selon la présente invention est particulièrement bien adapté à la dissolution des résines fluorées comprenant au moins un homopolymère et/ou copolymère de poly(fluorure de vinylidène), noté PVDF dans la suite.

Le système solvant utilisé selon la présente invention comprend une quantité supérieure ou égale à 50% en poids d'une composition (A) à base de DMSO. Selon un mode de réalisation la composition (A) comprend le DMSO seul. Par DMSO seul, ou plus simplement DMSO, on entend une composition (A) comprenant plus de 80% en poids, de préférence plus de 90% en poids, de préférence encore plus de 95% en poids de DMSO, le reste pouvant être constitué des impuretés inhérentes à la fabrication du DMSO, après purification éventuelle (comme décrit dans WO 1997/019047, EP 0 878 454, EP 0 878 466), et/ou d'agents odorants (comme décrit dans WO 2011/012820), et/ou tous autres additifs connus de l'homme du métier, tels que, par exemple et à titre non limitatif, choisis parmi stabilisants, colorants, agents anti-UV, conservateur, biocides, et autres.

Selon un autre mode de réalisation, la composition (A) peut comprendre, outre le DMSO un ou plusieurs autres solvants du polymère fluoré, différents d'une cétone. Avantageusement, le ou les autres solvants de la composition (A) sont ajoutés dans le but d'abaisser le point de cristallisation du DMSO. De tels solvants peuvent être choisis parmi ceux connus de l'homme du métier, et en particulier parmi les esters, les diesters, et de manière tout à fait préférée parmi les carbonate de propylène, carbonate de diéthyle, succinate de diméthyle, adipate de diméthyle, glutarate de diméthyle, et leurs mélanges, ces diesters étant plus connus sous le terme générique de DBE (« DiBasic Esters » en langue anglaise). Rhodia commercialise certains de ces DBE, notamment le glutarate de diméthyle sous la dénomination commerciale Rhodiasolv Iris^{®}. Dupont/Invista commercialise également des DBE de compositions variables en succinate de diméthyle, adipate de diméthyle et glutarate de diméthyle sous les dénominations DBE-2, DBE-3, DBE-4, DBE-5, DBE-6, DBE-9.

La quantité de solvant(s) présent(s) dans la composition (A) avec le DMSO, est en général comprise entre 0% et 50% en poids, de préférence entre 0% et 40% en poids, de préférence encore entre 0% et 30% en poids, par rapport au poids total de la composition (A), le complément à 100% étant constitué du DMSO seul ou en association avec les impuretés, agents odorants, et/ou autres additifs décrits précédemment.

La composition (B) comprend quant à elle au moins une cétone, qui peut être de tout type connu de l'homme du métier, de préférence au moins une cétone aliphatique, cycloaliphatique, ou aromatique, ainsi que les mélanges de deux ou plusieurs de ces cétones. De préférence les cétones comprises dans la composition (B) sont choisies parmi les cétones aliphatiques et/ou cycloaliphatiques, linéaires ou ramifiées, et par exemple, à titre non limitatif, les cétones sont choisies parmi la diméthylcétone (ou acétone), la diéthylcétone, la méthyléthylcétone, la méthyl-*iso*-butylcétone, la cyclohexanone éventuellement substituée, par exemple la triméthylcyclohexanone (TMCHONE), la cyclopentanone, et autres, ainsi que les mélanges de deux ou plusieurs de ces cétones en toutes proportions.

De manière très surprenante, l'ajout d'au moins une cétone au DMSO permet d'observer des résultats non linéaires, c'est-à-dire meilleurs que ceux observés lors de la dissolution de polymères fluorés dans le DMSO uniquement ou dans une cétone seule, lesdits résultats s'entendant en termes de viscosité et de stabilité dans le temps.

Dans un mode de réalisation de l'invention, on préfère une cétone ou un mélange de cétones, ayant un point d'ébullition proche de celui du DMSO, plus précisément proche de celui de la composition (A), ou encore une cétone ou un mélange de cétones formant un azéotrope avec le DMSO ou avec la composition (A). Dans ce mode de réalisation préféré, l'élimination du système solvant du polymère fluoré dans lequel il est dissous sera facilitée, la composition (A) et la composition (B) pouvant ainsi être éliminées simultanément par chauffage, évaporation et autre.

Un autre avantage lié aux points d'ébullition voisins ou identiques de la composition (A) et de la composition (B) ou encore lié à la formation d'un azéotrope entre la composition (A) et la composition (B) est leur facilité de purification, et recyclage.

L'acétone, la cyclohexanone et la triméthylcyclohexanone sont particulièrement adaptées et efficaces en tant que composition (B) dans le système solvant de la présente invention et confèrent aux solutions de polymères fluorés une excellente stabilité au stockage, allant jusqu'à 2, 3, voire plusieurs semaines. En outre la triméthylcyclohexanone possède un point d'ébullition très proche de celui du DMSO.

Dans le système solvant utilisé selon la présente invention, la composition (B) représente de 0,1% à 50% en poids du poids total du système solvant, le complément à 100% étant représenté par la composition (A) définie précédemment. De préférence, la composition (B) représente de 0,1% à 25% en poids, de préférence encore de 0,1% à 20% en poids, de manière tout à fait préférée, de 0,1% à 15% en poids du poids total du système solvant selon la présente invention.

Selon un mode de réalisation préféré de la présente invention, le système solvant de polymères fluorés utilisé comprend :
- de 70% à 95% en poids de DMSO, par exemple environ 75% en poids, et
- de 5% à 30% en poids d'au moins une cétone choisie parmi la cyclohexanone, la triméthylcyclohexanone, et leurs mélanges en toutes proportions, par exemple environ 25% en poids.

Selon un autre mode de réalisation préféré, le système solvant de polymères fluorés utilisé selon l'invention comprend :
- de 85% à 99% en poids de DMSO, par exemple environ 95% en poids, et
- de 1 % à 15% en poids d'acétone, par exemple environ 5% en poids.

Selon encore un autre mode de réalisation préféré, le système solvant de polymères fluorés utilisé selon la présente invention comprend :
- de 85% à 99% en poids, de préférence environ 95% en poids, d'un mélange de 50% en poids de DMSO avec 50% en poids de DBE, de préférence le glutarate de diméthyle, et
- de 1% à 15% en poids d'acétone, de préférence environ 5% en poids.

Selon encore un autre mode de réalisation préféré de la présente invention, le système solvant de polymères fluorés utilisé comprend :
- de 70% à 95% en poids, par exemple environ 75% en poids, d'un mélange de 50% en poids de DMSO avec 50% en poids de DBE, de préférence le glutarate de diméthyle, et
- de 5% à 30% en poids d'au moins une cétone choisie parmi la cyclohexanone, la triméthylcyclohexanone, et leurs mélanges en toutes proportions, de préférence environ 25% en poids.

Les systèmes solvants utilisés selon la présente invention tels qu'ils viennent d'être définis présentent en outre l'avantage de pouvoir solubiliser les polymères fluorés, en particulier les poly(fluorure de vinylidène) à une température moins élevée que celle requise lorsque la solubilisation est effectuée dans le DMSO uniquement, cette solubilisation pouvant même être effectuée dans certains cas, selon la nature du polymère fluoré et la nature du système solvant, à température ambiante.

Un autre avantage encore réside dans le fait que le système solvant utilisé selon l'invention confère aux solutions de polymères fluorés une viscosité relativement faible, c'est-à-dire plus faible que celle observée lorsque le seul solvant est le DMSO. Grâce à cet avantage, il est possible de solubiliser des taux de polymères fluorés plus élevés qu'avec la seule NMP ou le seul DMSO, ou encore de solubiliser des polymères fluorés de masse molaire plus élevée.

Selon encore un autre aspect, la présente invention concerne le procédé de solubilisation de polymère fluoré, en particulier de PVDF, comprenant au moins l'étape de mise en contact dudit polymère fluoré avec au moins un système solvant tel que précédemment défini.

Cette mise en contact est effectuée de préférence sous agitation, à température ambiante ou à une température comprise entre la température ambiante et 80°C, de préférence entre la température ambiante et 60°C, de préférence encore entre la température ambiante et 50°C. Le polymère fluoré peut être mis en contact avec au moins un système solvant selon l'invention sous toute forme, mais pour des raisons de rapidité de la dissolution, on préfère que ledit polymère fluoré soit sous forme de poudre.

Le système solvant utilisé selon la présente invention est tout à fait adapté pour la solubilisation de polymères fluorés, en particulier les PVDF. En d'autres termes l'utilisation du système solvant de l'invention permet l'obtention de solutions de polymères fluorés qui sont limpides et stables dans le temps.

La quantité de polymère(s) fluoré(s) qui peut être dissoute dans le système solvant utilisé selon l'invention varie dans de grandes proportions, selon la nature du polymère et la nature du système solvant, et est en général comprise entre 1% et 50% en poids, de préférence entre 1 % et 40% en poids, de préférence encore entre 1 % et 25% en poids, par exemple environ 10% en poids, de polymère fluoré par rapport au poids total de solution finale polymère fluoré + système solvant.

Selon un autre aspect, la présente invention concerne une solution comprenant :
- de 1% à 50% en poids, de préférence de 1% à 40% en poids, de préférence encore de 1% à 25% en poids, par exemple environ 10% en poids d'au moins un polymère fluoré, de préférence au moins un PVDF, et
- de 50% à 99% en poids, de préférence de 60% à 99% en poids, de préférence encore de 75% à 99% en poids, par exemple environ 90% en poids d'au moins un système solvant tel que défini précédemment.

Comme indiqué plus haut, les résines fluorées, et en particulier les PVDF, sont bien connues aujourd'hui pour leur excellente résistance chimique, leurs propriétés mécaniques remarquables, et leur excellente stabilité dans le temps. Toutes ces qualités en font des matériaux de choix pour leurs utilisations en tant que membranes pour la filtration et l'ultrafiltration, la fabrication de batteries, pour ne citer que certaines de leurs applications.

Les résines fluorées, et en particulier les PVDF, en raison de leur solubilité dans le système solvant utilisé selon la présente invention, peuvent ainsi aisément être mises en forme par moulage en milieu solvant selon le procédé d'inversion de phase (« solvent casting » en langue anglaise), ou encore être préparées sous forme de feuillets, de fibres, de fibres creuses, de tubes, et autres.

L'invention concerne également l'utilisation du système solvant de polymère fluoré tel que défini précédemment, ou une solution de polymère fluoré dans le système solvant tel que défini précédemment pour la fabrication de films, membranes et revêtements.

Les domaines d'application comprennent le traitement de l'eau potable et des eaux usées, la filtration du sang et des protéines, la préparation d'eau de très haute pureté, le diagnostique médical, et les filtrations intervenant dans les procédés chimiques, notamment lorsqu'est requise une résistance chimique exceptionnelle.

En outre certaines résines PVDF, comme par exemple les résines Kynar^{®}, sont approuvées pour le contact alimentaire, ce qui en fait un matériau de choix dans le domaine de la filtration dans l'industrie agro-alimentaire et de la boisson. Les membranes PVDF, en particulier Kynar^{®}, de haute densité peuvent être utilisées pour la séparation de solvants par « pervaporation ». Les membranes PVDF, en particulier Kynar^{®}, microporeuses peuvent être utilisées comme matériau substrat pour l'élaboration de membranes en polymère composite.

Les membranes PVDF, en particulier Kynar^{®} et Kynar Flex^{®}, sont également connues pour être utilisées pour la fabrication de batteries avec forte densité de charge. Le système solvant de la présente invention permet ainsi notamment la mise en solution de résines fluorées, en particulier PVDF, et notamment des résines Kynar^{®} et Kynar Flex^{®}, pour la fabrication de batteries de type Li-ion / polymère et lithium avec électrolyte liquide, le système solvant pouvant être évaporé par tout système connu de l'homme du métier, par exemple par chauffage.

Pour la préparation de batteries, le système solvant utilisé selon l'invention peut comprendre, outre la ou les résines fluorées tout type d'additifs et charges habituellement employées pour la synthèse desdites batteries, et notamment du carbone, qu'il soit sous forme de charbon, charbon actif, ou encore sous forme de nano-tubes de carbone (NTC).

La présente invention est maintenant illustrée au moyen des exemples qui suivent et qui ne limitent en aucun cas la portée de la protection telle que demandée dans les revendications annexées.

### Exemple 1

Des essais de solubilisation de PVDF Kynar^{®} 761 de la société Arkema ont été réalisé avec de la NMP, du DMSO, un mélange DMSO/TMCHONE (70%/30% en poids), un mélange DMSO/TMCHONE (50%/50% en poids), un mélange DMSO/TMCHONE (30%/70% en poids), et dans la TMCHONE seule.

10% en poids de Kynar^{®} 761 sont introduits dans le solvant à tester. Le mélange est chauffé à 50°C sous légère agitation.

Après quelques minutes, le Kynar^{®} 761 est complètement dissous sauf dans le cas du mélange DMSO/TMCHONE à 30%/70% en poids, et une solution transparente est obtenue pour tous ces solvants. On laisse revenir les solutions à température ambiante.

Les viscosités des solutions de Kynar^{®} 761 dissous sont alors caractérisées à 30°C sur un viscosimètre Brookfield cône-plan. Les résultats observés sont rassemblés dans le Tableau 1 suivant :

**-- Tableau 1 --**

| ***Taux de Kynar*^{®} *761*** | ***Solvant utilisé*** | ***Viscosité (Cp)*** |
|---|---|---|
| 10% en poids | NMP | 250 |
| 10% en poids | DMSO | 323 |
| 10% en poids | DMSO/TMCHONE (70%/30% en poids) | 260 |
| 10% en poids | DMSO/TMCHONE (50%/50% en poids) | 230 |
| 10% en poids | DMSO/TMCHONE (30%/70% en poids) | Non soluble |
| 10% en poids | TMCHONE | Non soluble |

On remarque que l'ajout de cétone dans le DMSO, en quantité inférieure ou égale à 50% en poids, voire égale à celle du DMSO, ne nuit pas à la solubilité du polymère fluoré, et au contraire favorise une diminution de la viscosité, par rapport à une solubilisation dans le DMSO seul. En revanche, une quantité plus importante de cétone empêche la solubilisation du polymère fluoré.

### Exemple 2

Les 4 solutions de l'exemple 1 ayant permis de solubiliser le Kynar^{®} 761 sont laissées à température ambiante pour étudier leur stabilité dans le temps.

Après 7 jours, l'analyse visuelle des solutions est réalisée, et les résultats sont présentés dans le Tableau 2 suivant :

**-- Tableau 2 --**

| ***Taux de Kynar*^{®} *761*** | ***Solvant utilisé*** | ***Aspect après 7 jours*** |
|---|---|---|
| 10% en poids | NMP | Solution visqueuse liquide transparente |
| 10% en poids | DMSO | Solution visqueuse liquide mais très troublée |
| 10% en poids | DMSO/TMCHONE (70%/30% en poids) | Solution visqueuse liquide transparente |
| 10% en poids | DMSO/TMCHONE (50%/50% en poids) | Solution solide gélifiée complètement trouble |

Avec le temps, les solutions instables évoluent et passent de l'état liquide transparent à l'état liquide troublé puis l'état de gel solide et trouble. Seule la composition de solvants selon la présente invention présente des caractéristiques similaires à la NMP en ce qui concerne la solubilisation de polymères fluorés.

En particulier, une composition comprenant du DMSO et la TMCHONE, dans les proportions 70%/30% en poids permet donc d'obtenir une solution de Kynar^{®} 761 à 10% stable dans le temps contrairement à une solution de DMSO pure ou une solution DMSO/TMCHONE avec un taux de TMCHONE supérieur à 50% en poids.

### Exemple 3

De manière similaire, des essais de solubilisation de Kynar^{®} 761 sont réalisés avec un mélange DMSO/TMCHONE (80%/20% en poids).

10% en poids de Kynar^{®} 761 sont introduits dans le solvant à tester. Le mélange est chauffé à 50°C sous légère agitation.

Après quelques minutes, le Kynar^{®} 761 est complètement dissous. On laisse la solution revenir à température ambiante puis on la laisse à température ambiante pour étudier sa stabilité dans le temps.

Après 21 jours, l'analyse visuelle de la solution est réalisée, et la solution est toujours liquide et transparente.

### Exemple 4

De manière similaire, des essais de solubilisation de Kynar^{®} 761 sont réalisés avec de la NMP, du DMSO, un mélange DMSO/cyclohexanone (80%/20% en poids), un mélange DMSO/cyclohexanone (50%/50% en poids), un mélange DMSO/cyclohexanone (30%/70% en poids), et de la cyclohexanone seule.

10% en poids de Kynar^{®} 761 sont introduits dans le solvant à tester. Le mélange est chauffé à 50°C sous légère agitation. Après quelques minutes, le Kynar^{®} 761 est complètement dissous sauf dans le cas du mélange cyclohexanone seule et une solution transparente est obtenue pour tous ces solvants. On laisse les solutions revenir à température ambiante.

Les viscosités des solutions de Kynar^{®} 761 dissous sont alors caractérisées à 30°C sur un viscosimètre Brookfield cône-plan. Les résultats observés sont rassemblés dans le Tableau 3 suivant :

**-- Tableau 3 --**

| ***Taux de Kynar*^{®} *761*** | ***Solvant utilisé*** | ***Viscosité (Cp)*** |
|---|---|---|
| 10% en poids | NMP | 250 |
| 10% en poids | DMSO | 323 |
| 10% en poids | DMSO/cyclohexanone (80%/20% en poids) | 275 |
| 10% en poids | DMSO/ cyclohexanone (50%/50% en poids) | 240 |
| 10% en poids | DMSO/ cyclohexanone (30%/70% en poids) | 216 |
| 10% en poids | Cyclohexanone | Non soluble |

Les compositions de solvant selon l'invention permettent d'obtenir des viscosités plus faibles que celles obtenues avec DMSO seul et comparable avec celle de la NMP.

### Exemple 5

Les solutions de l'exemple 4 ayant permis de solubiliser le Kynar^{®} 761 sont laissées à température ambiante pour étudier leur stabilité dans le temps.

Après 3 jours, l'analyse visuelle des solutions est réalisée et les résultats sont rassemblés dans le Tableau 4 suivant :

**-- Tableau 4 --**

| ***Taux de Kynar*^{®} *761*** | ***Solvant utilisé*** | ***Aspect après 3 jours*** |
|---|---|---|
| 10% en poids | NMP | Solution visqueuse liquide transparente |
| 10% en poids | DMSO | Solution visqueuse liquide mais troublée |
| 10% en poids | DMSO/cyclohexanone (80%/20% en poids) | Solution visqueuse liquide transparente |
| 10% en poids | DMSO/ cyclohexanone (50%/50% en poids) | Solution visqueuse liquide transparente |
| 10% en poids | DMSO/ cyclohexanone (30%/70% en poids) | Solution solide gélifiée complètement trouble |

Avec le temps, les solutions instables évoluent et passent de l'état liquide transparent à l'état liquide troublé puis l'état de gel solide et trouble. Les mélanges DMSO/cétone selon l'invention permettent d'obtenir une solution de polymère fluoré à 10% stable dans le temps contrairement à une solution de DMSO pure ou une solution DMSO/cétone avec des taux de cétone supérieurs à 70% en poids.

La solution DMSO/cyclohexanone (80%/20% en poids) est toujours liquide et transparente après 21 jours.

### Exemple 6

Des essais de solubilisation de Kynar^{®} 761 sont réalisés avec de la NMP, du DMSO, un mélange DMSO/acétone (95%/5% en poids), un mélange DMSO/acétone (80%/20% en poids), et acétone seule.

10% en poids de Kynar^{®} 761 sont introduits dans le solvant à tester. Le mélange est chauffé à 50°C sous légère agitation. Au bout de quelques minutes, le Kynar^{®} 761 est complètement dissous dans tous ces solvants et une solution transparente est obtenue pour tous ces solvants. On laisse revenir les solutions à température ambiante.

Les viscosités des solutions de Kynar^{®} 761 dissous sont alors caractérisées à 30°C sur un viscosimètre Brookfield cône-plan. Les résultats observés sont rassemblés dans le Tableau 5 suivant :

**-- Tableau 5 --**

| **Taux de Kynar^{®} 761** | **Solvant utilisé** | **Viscosité (Cp)** |
|---|---|---|
| 10% en poids | NMP | 250 |
| 10% en poids | DMSO | 323 |
| 10% en poids | DMSO/acétone (95/5% en poids) | 263 |
| 10% en poids | DMSO/acétone (80/20% en poids) | 120 |
| 10% en poids | acétone | 10 |

Les mélanges DMSO/acétone permettent donc d'obtenir des viscosités beaucoup plus faibles que celles obtenues avec DMSO ou NMP seuls.

### Exemple 7

Les 5 solutions de l'exemple 6 sont laissées à température ambiante pour étudier leur stabilité dans le temps. Après 3 jours, l'analyse visuelle des solutions est réalisée. Les résultats observés sont rassemblés dans le Tableau 6 suivant :

**-- Tableau 6 --**

| ***Taux de Kynar*^{®} *761*** | ***Solvant utilisé*** | ***Aspect après 3 jours*** |
|---|---|---|
| 10% en poids | NMP | Solution visqueuse liquide transparente |
| 10% en poids | DMSO | Solution visqueuse liquide mais troublée |
| 10% en poids | DMSO/acétone (95%/5% en poids) | Solution visqueuse liquide transparente |
| 10% en poids | DMSO/acétone (80%/20% en poids) | Solution visqueuse liquide transparente |
| 10% en poids | acétone | Solution solide gélifiée complètement trouble |

Avec le temps, les solutions instables évoluent de l'état liquide transparent à l'état liquide troublé puis l'état de gel solide et trouble.

Après 10 jours, la solution DMSO/acétone (95/5%) est toujours stable et a un aspect liquide et transparent. Après 45 jours, la solution DMSO/acétone (80%/20%) est toujours stable et a un aspect liquide transparent.

Un mélange DMSO/acétone (80%/20% en poids ou 95%/5% en poids) permet donc d'obtenir une solution de Kynar^{®} 761 à 10% stable dans le temps contrairement à une solution de DMSO pure ou une solution acétone pure.

### Exemple 8

Des essais de solubilisation de Kynar^{®} 761 sont réalisés avec du DMSO, un mélange DMSO/glutarate de diméthyle/acétone (66,5%/28,5%/5% en poids), un mélange DMSO/glutarate de diméthyle (70%/30% en poids) et glutarate de diméthyle seul.

10% en poids de Kynar^{®} 761 sont introduits dans le solvant à tester. Le mélange est chauffé à 50°C sous légère agitation. Après quelques minutes, le Kynar^{®} 761 est complètement dissous dans tous ces solvants sauf dans le cas du glutarate de diméthyle seul et une solution transparente est obtenue pour tous ces solvants. On laisse revenir les solutions à température ambiante.

Les viscosités des solutions de Kynar^{®} 761 dissous sont alors caractérisées à 30°C sur un viscosimètre Brookfield cône-plan. Les résultats observés sont rassemblés dans le Tableau 7 suivant :

**-- Tableau 7 --**

| **Taux de Kynar^{®} 761** | **Solvant utilisé** | **Viscosité (Cp)** |
|---|---|---|
| 10% en poids | DMSO | 323 |
| 10% en poids | DMSO/glutarate de diméthyle/acétone (66,5%/28,5%/5% en poids) | 278 |
| 10% en poids | DMSO/ glutarate de diméthyle (70/30% en poids) | 335 |
| 10% en poids | Glutarate de diméthyle | Insoluble à 50°C |

Les mélanges DMSO/glutarate de diméthyle/acétone permettent donc d'obtenir des viscosités plus faibles que celles obtenues avec DMSO seul. Le glutarate de diméthyle seul ne permet pas de solubiliser le Kynar^{®} 761 à 50°C. Il faut chauffer vers 100°C pour y parvenir ce qui ne présente pas d'intérêt.

### Exemple 9

Les 3 solutions de l'exemple 8 ayant permis de solubiliser le Kynar^{®} 761 sont laissées à température ambiante pour étudier leur stabilité dans le temps.

Après 7 jours, l'analyse visuelle des solutions est réalisée. Les résultats observés sont rassemblés dans le Tableau 8 suivant :

**-- Tableau 8 --**

| ***Taux de Kynar*^{®} *761*** | ***Solvant utilisé*** | ***Aspect après 7 jours*** |
|---|---|---|
| 10% en poids | DMSO | Solution visqueuse liquide mais troublée |
| 10% en poids | DMSO/glutarate de diméthyle/acétone 66,5%/28,5%/5% en poids) | Solution visqueuse liquide transparente |
| 10% en poids | DMSO/ glutarate de diméthyle (70/30% en poids) | Solution solide gélifiée complètement trouble |

Un mélange DMSO/glutarate de diméthyle/acétone (66,5%/28,5%/5% en poids) permet donc d'obtenir une solution de Kynar^{®} 761 à 10% stable dans le temps contrairement à une solution de DMSO pure ou une solution glutarate de diméthyle pure.

## Revendications

1. Utilisation d'au moins un système solvant pour la solubilisation de polymères fluorés, en particulier le poly(fluorure de vinylidène), ledit système solvant comprenant :
- de 50% à 99,9% en poids d'une composition (A) comprenant du diméthylsulfoxyde (DMSO), et
- de 0,1% à 50% en poids d'une composition (B) comprenant au moins une cétone.

2. Utilisation selon la revendication 1, dans laquelle le dit polymère fluoré est choisi parmi les homopolymères et copolymères fluorés et/ou chlorofluorés, obtenus par polymérisation en suspension, en émulsion, les copolymères (éthylène/chlorotrifluoroéthylène), ainsi que les perfluoro-ionomères, et autres, de préférence choisis parmi les résines fluorées comprenant au moins un homopolymère et/ou copolymère de poly(fluorure de vinylidène).

3. Utilisation selon la revendication 1 ou la revendication 2, dans laquelle la composition (A) comprend, outre le DMSO, un ou plusieurs autres solvants du polymère fluoré, différents d'une cétone.

4. Utilisation selon la revendication 3, dans laquelle le ou les autres solvants du polymère fluoré, différents d'une cétone est (sont) choisi(s) parmi les esters, les diesters, de préférence parmi les carbonate de propylène, carbonate de diéthyle, succinate de diméthyle, adipate de diméthyle, glutarate de diméthyle, et leurs mélanges.

5. Utilisation selon la revendication 3 ou la revendication 4, dans laquelle la quantité de solvant(s) présent(s) dans la composition (A) avec le DMSO, est comprise entre 0% et 50% en poids, de préférence entre 0% et 40% en poids, de préférence encore entre 0% et 30% en poids, par rapport au poids total de la composition (A), le complément à 100% étant constitué du DMSO seul ou en association avec impuretés, agents odorants, et/ou autres additifs.

6. Utilisation selon l'une quelconque des revendications précédentes, dans laquelle la au moins une cétone comprise dans la composition (B) est choisie parmi les cétones aliphatiques et/ou cycloaliphatiques, linéaires ou ramifiées, et de préférence parmi la diméthylcétone, la diéthylcétone, la méthyléthylcétone, la méthyl-*iso*-butylcétone, la cyclohexanone éventuellement substituée, la triméthylcyclohexanone (TMCHONE), la cyclopentanone, et autres, ainsi que les mélanges de deux ou plusieurs de ces cétones en toutes proportions.

7. Utilisation selon l'une quelconque des revendications précédentes, comprenant, dans laquelle le système solvant comprend :
• de 70% à 95% en poids de DMSO, par exemple environ 75% en poids, et
• de 5% à 30% en poids d'au moins une cétone choisie parmi la cyclohexanone, la triméthylcyclohexanone, et leurs mélanges en toutes proportions, par exemple environ 25% en poids.

8. Utilisation selon l'une quelconque des revendications 1 à 6, dans laquelle le système solvant comprend :
• de 85% à 99% en poids de DMSO, par exemple environ 95% en poids, et
• de 1% à 15% en poids d'acétone, par exemple environ 5% en poids.

9. Utilisation selon l'une quelconque des revendications 1 à 6, dans laquelle le système solvant comprend :
• de 85% à 99% en poids, de préférence environ 95% en poids, d'un mélange de 50% en poids de DMSO avec 50% en poids de DBE, de préférence le glutarate de diméthyle, et
• de 1 % à 15% en poids d'acétone, de préférence environ 5% en poids.

10. Utilisation selon l'une quelconque des revendications 1 à 6, dans laquelle le système solvant comprend :
• de 70% à 95% en poids, par exemple environ 75% en poids, d'un mélange de 50% en poids de DMSO avec 50% en poids de DBE, de préférence le glutarate de diméthyle, et
• de 5% à 30% en poids d'au moins une cétone choisie parmi la cyclohexanone, la triméthylcyclohexanone, et leurs mélanges en toutes proportions, de préférence environ 25% en poids.

11. Utilisation selon l'une quelconque des revendications 1 à 10, pour la fabrication de films, membranes et revêtements, et dans la fabrication de batteries.

12. Procédé de solubilisation de polymère fluoré, en particulier de poly(fluorure de vinylidène), comprenant au moins l'étape de mise en contact dudit polymère fluoré avec au moins un système solvant de l'une quelconque des revendications 1 à 10.

13. Solution comprenant :
• de 1% à 50% en poids, de préférence de 1% à 40% en poids, de préférence encore de 1% à 25% en poids, d'au moins un polymère fluoré, de préférence au moins un poly(fluorure de vinylidène), et
• de 50% à 99% en poids, de préférence de 60% à 99% en poids, de préférence encore de 75% à 99% en poids, d'au moins un système solvant selon l'une quelconque des revendications 1 à 10.

14. Utilisation d'une solution selon la revendication 13, pour la fabrication de films, membranes et revêtements, et dans la fabrication de batteries.

## Patentansprüche

1. Verwendung mindestens eines Lösungsmittelsystems zur Auflösung von Fluorpolymeren, insbesondere Poly(vinylidenfluorid), wobei das Lösungsmittelsystem Folgendes umfasst:
- 50 bis 99,9 Gew.-% einer Zusammensetzung (A), die Dimethylsulfoxid (DMSO) umfasst, und
- 0,1 bis 50 Gew.-% einer Zusammensetzung (B), die mindestens ein Keton umfasst.

2. Verwendung nach Anspruch 1, wobei das Fluorpolymer aus durch Suspensions- oder Emulsionspolymerisation erhaltenen Fluor- und/oder Chlorfluorhomopolymeren und -copolymeren, (Ethylen/Chlortrifluorethylen)-Copolymeren sowie Perfluorionomeren und anderen und vorzugsweise aus Fluorharzen, die mindestens ein Homopolymer und/oder Copolymer von Poly(vinylidenfluorid) umfassen, ausgewählt ist.

3. Verwendung nach Anspruch 1 oder Anspruch 2, wobei die Zusammensetzung (A) neben dem DMSO ein oder mehrere andere Fluorpolymer-Lösungsmittel, die von einem Keton verschieden sind, umfasst.

4. Verwendung nach Anspruch 3, wobei das bzw. die anderen Fluorpolymer-Lösungsmittel, die von einem Keton verschieden sind, aus Estern, Diestern, vorzugsweise aus Propylencarbonat, Diethylcarbonat, Dimethylsuccinat, Dimethyladipat, Dimethylglutarat und Mischungen davon ausgewählt ist bzw. sind.

5. Verwendung nach Anspruch 3 oder Anspruch 4, wobei die Menge des Lösungsmittels bzw. der Lösungsmittel, das bzw. die in der Zusammensetzung (A) mit dem DMSO vorliegt bzw. vorliegen, zwischen 0 und 50 Gew.-%, vorzugsweise zwischen 0 und 40 Gew.-% und noch weiter bevorzugt zwischen 0 und 30 Gew.-%, bezogen auf das Gesamtgewicht der Zusammensetzung (A), beträgt, wobei der Rest auf 100% aus DMSO alleine oder in Kombination mit Verunreinigungen, Odoriermitteln und/oder anderen Additiven besteht.

6. Verwendung nach einem der vorhergehenden Ansprüche, wobei das mindestens eine Keton, das in der Zusammensetzung (B) enthalten ist, aus linearen oder verzweigten aliphatischen und/oder cycloaliphatischen Ketonen und vorzugsweise aus Dimethylketon, Diethylketon, Methylethylketon, Methylisobutylketon, gegebenenfalls substituiertem Cyclohexanon, Trimethylcyclohexanon (TMCHONE), Cyclopentanon und anderen sowie Mischungen von zwei oder mehr dieser Ketone in allen Verhältnissen ausgewählt ist.

7. Verwendung nach einem der vorhergehenden Ansprüche, wobei das Lösungsmittelsystem Folgendes umfasst:
• 70 bis 95 Gew.-% DMSO, beispielsweise ungefähr 75 Gew.-%, und
• 5 bis 30 Gew.-% mindestens eines Ketons, das aus Cyclohexanon, Trimethylcyclohexanon und Mischungen davon in allen Verhältnissen ausgewählt ist, beispielsweise ungefähr 25 Gew.-%.

8. Verwendung nach einem der Ansprüche 1 bis 6, wobei das Lösungsmittelsystem Folgendes umfasst:
• 85 bis 99 Gew.-% DMSO, beispielsweise ungefähr 95 Gew.-%, und
• 1 bis 15 Gew.-% Aceton, beispielsweise ungefähr 5 Gew.-%.

9. Verwendung nach einem der Ansprüche 1 bis 6, wobei das Lösungsmittelsystem Folgendes umfasst:
• 85 bis 99 Gew.-% und vorzugsweise ungefähr 95 Gew.-% einer Mischung aus 50 Gew.-% DMSO und 50 Gew.-% DBE, vorzugsweise Dimethylglutarat, und
• 1 bis 15 Gew.-% Aceton, vorzugsweise ungefähr 5 Gew.-%.

10. Verwendung nach einem der Ansprüche 1 bis 6, wobei das Lösungsmittelsystem Folgendes umfasst:
• 70 bis 95 Gew.-%, beispielsweise ungefähr 75 Gew.-%, einer Mischung aus 50 Gew.-% DMSO und 50 Gew.-% DBE, vorzugsweise Dimethylglutarat, und
• 5 bis 30 Gew.-% mindestens eines Ketons, das aus Cyclohexanon, Trimethylcyclohexanon und Mischungen davon in allen Verhältnissen ausgewählt ist, vorzugsweise ungefähr 25 Gew.-%.

11. Verwendung nach einem der Ansprüche 1 bis 10 zur Herstellung von Folien, Membranen und Überzügen und bei der Herstellung von Batterien.

12. Verfahren zur Auflösung von Fluorpolymer, insbesondere Poly(vinylidenfluorid), das mindestens den Schritt des Inberührungbringens des Fluorpolymers mit mindestens einem Lösungsmittelsystem gemäß einem der Ansprüche 1 bis 10 umfasst.

13. Lösung, umfassend:
• 1 bis 50 Gew.-%, vorzugsweise 1 bis 40 Gew.-% und noch weiter bevorzugt 1 bis 25 Gew.-% mindestens eines Fluorpolymers, vorzugsweise mindestens eines Poly(vinylidenfluorid)s, und
• 50 bis 99 Gew.-%, vorzugsweise 60 bis 99 Gew.-% und noch weiter bevorzugt 75 bis 99 Gew.-% mindestens eines Lösungsmittelsystems gemäß einem der Ansprüche 1 bis 10.

14. Verwendung einer Lösung nach Anspruch 13 zur Herstellung von Folien, Membranen und Überzügen und bei der Herstellung von Batterien.

## Claims

1. Use of at least one solvent system for the dissolution of fluoropolymers, in particular poly(vinylidene fluoride), said solvent system comprising:
- from 50 to 99.9% by weight of a composition (A) comprising dimethyl sulphoxide (DMSO), and
- from 0.1 to 50% by weight of a composition (B) comprising at least one ketone.

2. Use according to Claim 1, in which the said fluoropolymer is chosen from fluorinated and/or chlorofluorinated homopolymers and copolymers obtained by suspension or emulsion polymerization, ethylene/chlorotrifluoroethylene copolymers, and perfluoroionomers, and others, preferably chosen from fluororesins comprising at least one poly(vinylidene fluoride) homopolymer and/or copolymer.

3. Use according to Claim 1 or Claim 2, in which the composition (A) comprises, in addition to the DMSO, one or more other solvents for the fluoropolymer other than a ketone.

4. Use according to Claim 3, in which the other solvent or solvents of the fluoropolymer other than a ketone is (are) chosen from esters, diesters, preferably from propylene carbonate, diethyl carbonate, dimethyl succinate, dimethyl adipate, dimethyl glutarate, and their mixtures.

5. Use according to Claim 3 or Claim 4, in which the amount of solvent(s) present in the composition (A) with the DMSO is between 0 and 50% by weight, preferably between 0 and 40% by weight and more preferably between 0 and 30% by weight, with respect to the total weight of the composition (A), the remainder to 100% consisting of the DMSO, alone or in combination with impurities, odorous agents and/or other additives.

6. Use according to any one of the preceding claims, in which the at least one ketone included in the composition (B) is chosen from linear or branched aliphatic and/or cycloaliphatic ketones, preferably from dimethyl ketone, diethyl ketone, methyl ethyl ketone, methyl isobutyl ketone, optionally substituted cyclohexanone, trimethylcyclohexanone (TMCHONE), cyclopentanone, and others, and the mixtures of two or more of these ketones in all proportions.

7. Use according to any one of the preceding claims, in which the solvent system comprises:
• from 70 to 95% by weight of DMSO, for example approximately 75% by weight, and
• from 5 to 30% by weight of at least one ketone chosen from cyclohexanone, trimethylcyclohexanone and their mixtures in all proportions, for example approximately 25% by weight.

8. Use according to any one of Claims 1 to 6, in which the solvent system comprises:
• from 85 to 99% by weight of DMSO, for example approximately 95% by weight, and
• from 1 to 15% by weight of acetone, for example approximately 5% by weight.

9. Use according to any one of Claims 1 to 6, in which the solvent system comprises:
• from 85 to 99% by weight, preferably approximately 95% by weight, of a mixture of 50% by weight of DMSO with 50% by weight of DBE, preferably dimethyl glutarate, and
• from 1 to 15% by weight of acetone, preferably approximately 5% by weight.

10. Use according to any one of Claims 1 to 6, in which the solvent system comprises:
• from 70 to 95% by weight, for example approximately 75% by weight, of a mixture of 50% by weight of DMSO with 50% by weight of DBE, preferably dimethyl glutarate, and
• from 5 to 30% by weight of at least one ketone chosen from cyclohexanone, trimethylcyclohexanone and their mixtures in all proportions, preferably approximately 25% by weight.

11. Use according to any one of Claims 1 to 10, in the manufacture of films, membranes and coatings and in the manufacture of batteries.

12. Process for the dissolution of fluoropolymer, in particular poly(vinylidene fluoride), comprising at least the stage of bringing the said fluoropolymer into contact with at least one solvent system according to any one of Claims 1 to 10.

13. Solution comprising:
• from 1 to 50% by weight, preferably from 1 to 40% by weight and more preferably from 1 to 25% by weight of at least one fluoropolymer, preferably at least one poly(vinylidene fluoride), and
• from 50 to 99% by weight, preferably from 60 to 99% by weight and more preferably from 75 to 99% by weight of at least one solvent system according to any one of Claims 1 to 10.

14. Use of a solution according to Claim 13, in the manufacture of films, membranes and coatings and in the manufacture of batteries.
